# EUROPEAN PATENT SPECIFICATION

(11) **EP 3 440 332 B1**
(45) Date of publication and mention of the grant of the patent: **13.04.2022**
(21) Application number: 16788851.0
(22) Date of filing: 11.10.2016
(51) Int. Cl.: F02K 9/26, F02K 9/32, F02K 9/94, F02K 9/95

(54) **THRUSTER WITH SEGMENTED PROPELLANT**
SCHUBERZEUGER MIT SEGMENTIERTEM TREIBSTOFF
PROPULSEUR À AGENT DE PROPULSION SEGMENTÉ

(30) Priority: 05.04.2016 US 201615091245
(43) Date of publication of application: 13.02.2019
(73) Proprietor: Raytheon Company, Waltham, MA 02451 (US)
(72) Inventor: KOEHLER, Frederick B., Tucson, Arizona 85745 (US); DANFORTH, Jeremy C., Tucson, Arizona 85750 (US); LYMAN, Ward D., Tucson, Arizona 85710 (US); LANGHENRY, Mark T., Tucson, Arizona 85730 (US); SUMMERS, Matt H., Gilbert, Arizona 85295 (US); PONTIUS, Paul E., Highlands Rance, Colorado 80126 (US); PAPE, Brian M., Aurora, Colorado 80015 (US); STALLINGS, Jared D., Denver, Colorado 80249 (US); VILLARREAL, James K., Tucson, Arizona 85750 (US); VILLARREAL, Thomas, Tucson, Arizona 85743 (US)
(74) Representative: Dentons UK and Middle East LLP
(86) International application number: PCT/US2016/056387
(87) International publication number: WO 2017/176311

(56) References cited:
- WO-A2-2014/120299
- US-A- 2 987 881
- US-A1- 2008 092 521
- US-A1- 2011 259 230
- US-A1- 2012 137 912

## Description

### BACKGROUND OF THE INVENTION

### FIELD OF THE INVENTION

The invention is in the field of thrusters for flight vehicles, such as satellites.

### DESCRIPTION OF THE RELATED ART

Thrusters are used in a wide variety of flight vehicles, including spacecraft and aircraft of various sizes, from large to small. Thrusters may be used for any of a variety of purposes, from providing the main motive force for the vehicle to use in steering and/or course correction. There is difficulty in employing such thrusters in small flight vehicles, such as small satellites. A difficulty also arises when it would desirable for a thruster to be used multiple times, such as for multiple course correction or steering burns.

US 2008/092521 A1 discloses motor designs that enable the control of ignition, combustion burn rate, extinguishment, and reignition of solid propellants by precise application of electrical power. Design of such motors, including choice of electrode materials, the form of electric power, and exemplary facial-extent electrode and axial-extent electrode configurations are also provided.

US 2012/137912 A1 discloses a thruster stack assembly and method for manufacturing the same. The thruster stack assembly includes a plurality of grain elements having a common core region (e.g., a channel or passageway), where each grain element comprises a volume of electrically ignitable propellant. The thruster stack assembly further includes electrodes associated with the plurality of grain elements, the electrodes adapted for selectively igniting the plurality of grain elements. In one example, one or more of the grain elements may be ignited and combusted without igniting or damaging adjacent grain elements of the stack. The core region serves to channel combustion gases and exhaust from the thruster stack. Multiple stacks may be assembled together to form three-dimensional thruster arrays. Document US3636709 discloses a thruster comprising an electrically-operated propellant according to the state of the art.

### SUMMARY OF THE INVENTION

According to an aspect the invention provides a thruster comprising: an electrically-operated propellant, wherein the electrically-operated propellant comprises an oxidizer, a fuel and a binder, and wherein the electrically-operated propellant is configured to extinguish with the cessation of electricity at pressures of between 1379 and 13790 kPa; electrodes operatively coupled to the electrically-operated propellant; and a propellant feeder for moving the propellant relative to the electrodes; wherein the propellant includes multiple propellant segments; and wherein each of the propellant segments includes a sealing material surrounding a propellant material, with the sealing material configured to maintain a desired amount of moisture in the propellant material of the propellant segments.

According to a preferred embodiment, the propellant feeder includes a push rod that pushes the propellant toward the electrodes.

According to a preferred embodiment, the feed mechanism includes a resilient device providing a resilient force to push the propellant toward the electrodes.

According to a preferred embodiment, the resilient device is a coil spring.

According to a preferred embodiment, the segments include segments of different sizes.

According to a preferred embodiment, the segments include multiple relatively small segments and multiple relatively large segments that are larger than the relatively small segments.

According to a preferred embodiment, the relatively small segments and the relatively large segments are positioned such that at least some of the relatively small segments are consumed (or partially consumed) before any of the relatively large segments are consumed (or partially consumed).

According to a preferred embodiment, a thruster further includes a nozzle through which pass pressurized gasses from combustion of the electrically-operated propellant.

According to a preferred embodiment, a thruster is part of a flight vehicle.

According to a non-claimed embodiment, a thruster is part of a space vehicle.

According to still another aspect, the invention provides a method of firing a thruster, the method comprising: igniting a first electrically-operated propellant segment of a plurality of electrically-operated propellant segments, wherein the igniting including using electrodes of the thruster to ignite the electrically-operated propellant segment; moving a second electrically-operated propellant segment into engagement with the electrodes; and subsequent to the moving and to the igniting the first electrically-operated propellant segment, using the electrodes to ignite the second electrically-operated propellant segment; wherein each electrically-operated propellant segment comprises a propellant material, wherein the propellant material comprises an oxidizer, a fuel and a binder, and wherein the propellant material is configured to extinguish with the cessation of electricity at pressures of between 1379 and 13790 kPa; and wherein each of the propellant segments includes a sealing material surrounding the propellant material, with the sealing material configured to maintain a desired amount of moisture in the propellant material.

According to a preferred embodiment, the first electrically-operated propellant segment is smaller than the second electrically-operated propellant segment, and the igniting the second electrically-operated propellant segment produces more thrust than the igniting the first electrically-operated propellant segment.

According to a preferred embodiment, the first electrically-operated propellant segment is larger than the second electrically-operated propellant segment, and the igniting the second electrically-operated propellant segment produces less thrust than the igniting the first electrically-operated propellant segment.

According to a preferred embodiment, the first electrically-operated propellant segment is the same size as the second electrically-operated propellant segment, and the igniting the second electrically-operated propellant segment produces the same amount of thrust as the igniting the first electrically-operated propellant segment.

According to a preferred embodiment, the moving the second electrically-operated propellant segment into engagement with the electrodes is performed by a propellant feeder of the thruster.

According to a preferred embodiment, the moving the second electrically-operated propellant segment into engagement with the electrodes is part of moving all unconsumed electrically-operated propellant segments of the plurality of electrically-operated propellant segments.

According to a preferred embodiment, the moving the unconsumed electrically-operated propellant segments includes using a control rod of the propellant feeder to push the unconsumed electrically-operated propellant segments toward the electrodes.

According to a preferred embodiment, the moving the unconsumed electrically-operated propellant segments includes using a resilient device of the propellant feeder to push the unconsumed electrically-operated propellant segments toward the electrodes.

According to a preferred embodiment, there is only partial burning of one or both of the propellant segments.

According to a non-claimed embodiment, the thruster includes a pressure equalization feature.

According to a non-claimed embodiment, the pressure equalization feature keeps the propellant in position with respect to the electrodes.

According to a non-claimed embodiment, the thruster includes a channel, protrusion, and/or recess extending along and engaging the propellant segments.

To the accomplishment of the foregoing and related ends, the invention comprises the features hereinafter fully described and particularly pointed out in the claims. The following description and the annexed drawings set forth in detail certain illustrative embodiments of the invention. These embodiments are indicative, however, of but a few of the various ways in which the principles of the invention may be employed. Other objects, advantages and novel features of the invention will become apparent from the following detailed description of the invention when considered in conjunction with the drawings.

### BRIEF DESCRIPTION OF THE DRAWINGS

The annexed drawings, which are not necessarily to scale, show various aspects of the invention.
Fig. 1A is a side sectional view of part of the thruster, according to an embodiment of the invention.
Fig. 1B is another sectional view of a thruster according to an embodiment of the invention.
Fig. 1C is an oblique view of a propellant carrier of the thruster of Fig. 1B.
Fig. 2 is a side sectional view of part of the thruster, according to another embodiment of the invention.
Fig. 3 is a side sectional view of part of the thruster, according to yet another embodiment of the invention.
Fig. 4 is an oblique, partial cutaway view of a flight vehicle (a satellite) that includes thrusters, according to an embodiment of the invention.

### DETAILED DESCRIPTION

A thruster includes multiple segments of electrically-operated propellant, electrodes for igniting one or a few of the electrically-operated propellant segments at a time, and a propellant feeder for moving further propellant segments into engagement with the electrodes. The segments may be configured to provide equal increments of thrust, or different amounts of thrust. The segments may each include an electrically-operated propellant material surrounded by a sealing material, so as to keep the propellant material away from moisture and other contaminants (and/or the vacuum of space) before each individual segment is to be used. The thruster may be included in any of a variety of flight vehicles, for example in a small satellite such as a CubeSat satellite, for instance having a volume of about 1 liter, and a mass of no more than about 1.33 kg.

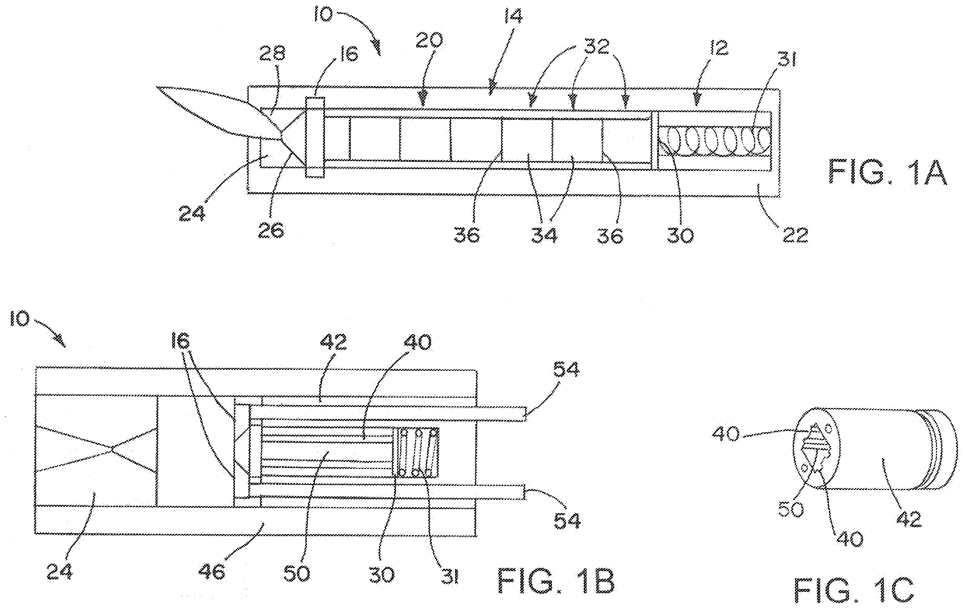

Fig. 1A shows a thruster 10 in which a propellant feeder or feed mechanism 12 is used to push portions of an electrically-operated propellant 14 into engagement with electrodes 16 that are at one end of the thruster 10. The electrodes 16 are configured to activate a portion of the electrically-operated propellant 14 at any one time, with only a portion of the propellant 14 between the electrodes 16. The electrodes 16 may be located at one end of a propellant-receiving cavity 20 in a surrounding structure 22, in which the propellant 14 is located. The electrodes 16 are located adjacent to or near a nozzle structure 24. The nozzle structure 24 may include a converging portion 26 and a diverging portion 28, which may help convert some of the heat energy of the pressurized gasses into kinetic energy, enhancing the amount of thrust produced. The nozzle structure 24 alternatively may have any of a wide variety other configurations than the one illustrated in Fig. 1A. As a further alternative, optionally the nozzle structure 24 may be omitted entirely.

The nozzle structure 24 may be configured to expel pressurized gases in any of a variety of suitable directions. The nozzle structure 24 may be configured to expel pressurized gases along the longitudinal axis of the thruster 10 (as shown), or may be configured to expel the pressurized gases at a nonzero angle, in any suitable direction, relative to the axis of the thruster 10.

The electrodes 16 cause combustion in a portion of the propellant 14, and the pressurized gases exit a flight vehicle, such as a satellite that the thruster is part of, through the nozzle structure 24. As the propellant 14 is consumed the feeder 12 is used to bring additional amounts of the propellant 14 between the electrodes 16 as desired, to enable consumption of additional amounts of the propellant 14 to produce additional thrust.

The propellant feeder 12 may be any of a variety of mechanical mechanisms for moving the propellant 14 (or parts of the propellant 14) into engagement with the electrodes 16. To give one example, the feeder 12 may include a push rod 30 that pushes the propellant 14 toward the electrodes 16. The push rod 30 may be actively driven, such as by a small actuator, for example a small electrical motor. Alternatively, as shown in the illustrated embodiment, a resilient force, such as that provided by a coil spring 31, may bias movement of the propellant 14 toward the electrodes 16. Many other configurations for the feeder 12 are possible, including use of other sorts of springs, other resilient devices, and/or other sorts of mechanical pusher mechanisms.

The propellant 14 may be made up of multiple propellant segments or packets 32. Each of the segments 32 includes electrically-operated propellant material 34, surrounded by sealing material 36. The sealing material 36 prevents moisture or other contaminants from getting into the propellant segments 32 prior to use, and/or to retain moisture in the segments 32, such as to prevent moisture from escaping into the vacuum of space (or another environment). The sealing material 36 also can serve to keep the correct amount of moisture in when exposed to the vacuum of space. Exposure of the propellant material 34 to moisture, such as from a high-humidity environment, can result in the propellant 34 eventually absorbing enough moisture so as become unusable. Exposure to a desiccating environment, such as the vacuum of space or a low-humidity environment, may also adversely affect the usability of the propellant 34. Therefore the sealing material 36 in essence keeps the propellant material 34 in good condition (with a proper amount of moisture) prior to use.

In operation the propellant material 34 of the segments 32 may be fully or partially consumed, in sequence. For example, the propellant material 34 of the first of the segments 32 may be fully or partially consumed before a second of the segments 32 is put into place, with the propellant material 34 of the second of the segments 32 then fully or partially consumed.

The thruster 10 may include a pressure equalization feature, to keep the segments in position with respect to the electrodes 16. The pressure equalization feature includes a channel, protrusion, and/or recess extending along and engaging the propellant segments 32. The pressure equalization feature keeps the propellant 14 from being "blown" out of position with respect to the electrodes 12. The feature, such as the channel or other features, may extend from the electrode/burn front of the propellant 14 to the back of where the propellant 14 is being pushed.

Figs. 1B and 1C show details of parts of the thruster 10 having a pressure equalization feature, with channels 40 in a propellant carrier 42 that receives the propellant segments 32 (Fig. 1A). The propellant carrier 42 is cylindrical, and fits in a thruster body 46 of the thruster 10. The segments 32 are placed in a propellant cavity 50 of the carrier 42, with a pusher (rod 30 and spring 31) used to push the segments 32 to the electrodes 16. Electrode connectors 54 are used to connect the electrodes 16 to an electric power source such as a battery. The propellant cavity 50 in the illustrated embodiment has a generally square cross sectional shape, although a variety of other suitable shapes may be used instead.

The propellant material 34 is made of materials that produce an electrically-activated (or electrically operated) solid propellant. Examples of such materials may be found in US Patent Publication 2014/0174313 A1. As described in that publication, a source material for making an electrically-operated solid propellant includes an oxidizer, a fuel, and a binder. The oxidizer may be a liquid-based perchlorate oxidizer that includes aluminum perchlorate, barium perchlorate, calcium perchlorate, lithium perchlorate, magnesium perchlorate, perchlorate acid, strontium perchlorate, and/or sodium perchlorate, to give a few examples. The fuel may be a metal-based fuel, for example including tungsten, magnesium, copper oxide, copper, titanium, and/or aluminum. The binder may include casein, methyl cellulose, polyethylene oxide, polyvinyl acetate, and/or polyvinyl alcohol. In one example, a material used in an additive manufacturing process may have 150-250% of the solvent (by weight percentage) as that used for a bulk cast or molded material that is produced in a non-additive process.

The electrically operated propellant ignites with the application of electricity and correspondingly extinguishes with the cessation of electricity, even when exposed to high pressures, though below a high pressure threshold. For example, when exposed to ambient or high pressures, such as atmospheric pressure, pressures greater than 1379 kPa (200 psi), 3447 kPa (500 psi), 6895 kPa (1000 psi), 10342 kPa (1500 psi) and up to 13790 kPa (2000 psi), the electrically operated propellant is extinguished with the interruption of electricity (e.g., voltage or current) applied across the electrically operated propellant. In other words, without application of electricity, the combustion of the electrically operated propellant is not self-sustaining at high pressures, such as high pressures of 1379 kPa (200 psi) or more and less than 13790 kPa (2000 psi). Thus, the electrically operated propellant is configured for "on" and "off" operation under the described variety of conditions.

A battery or other power source (not shown) may be electrically coupled to the electrodes 16 to apply a suitable voltage or current across the propellant 34, to ignite and/or maintain combustion in the propellant 34. A controller (not shown), such as an integrated circuit device (or other electrical or electronic controller) with suitable hardware and/or software may used to control the supply of electrical power to the electrodes 16. The controller may be operatively coupled to a communication device, such a radio, to receive instructions from a ground station or space platform, and/or to send data or information.

The oxidizer may be an aqueous solution, with the oxidizer material dissolved in water and/or glycerol. It has been found that controlling the amount of water and/or glycerol in the extruded material is important in additive manufacture of the propellant 34. Too much solvent in the printed mixture can cause problems with curing the extruded material and having the extruded material properly maintain its shape. Too little solvent can result in problems with the material adhering to other material layers.

The raw propellant material that is used to additively manufacture the propellant 34 may have any of a variety of other suitable formulations. Broadly, the raw propellant material may include a fuel, a solvent (e.g., water or glycerin), an oxidizer, and a binder. The fuel and the oxidizer are the chemically-active components that react with one another to produce the pressurized gases. The solvent receives the fuel and other components, to allow mixing together of the components into a flowable material. The binder aids in maintaining the raw material as a unified material that can be cured and/or dried into a solid mass.

The sealing material 36 may combustible, in that it burns off as the propellant material 34 within is fully or partially consumed. The sealing material 36 also may serve to some extent as a barrier, preventing combustion from one propellant segment 32 to another of the propellant segments 32 (preventing ignition of other propellant segments 32) until desired. The sealing material 36 could be made out of any of a variety of suitable materials, for example poly(vinyl alcohol) (PVA), silicone, epoxy, or any other suitable organic or inorganic material.

As shown in Fig. 1A, all of the propellant segments 32 may be the same size, or roughly the same size, providing equal (or substantially equal) amounts of thrust. A control mechanism or controller (not shown) may be operably coupled to the thrusters 10 to fire the thruster 10 at a chosen time or times, for whatever purpose the thrust is to be used for. The controller (or another controller or control mechanism, may also be used to operate the propellant feeder 12, to advance the propellant segments 32 as desired, for the propellant segments 32 to be fully and/or partially burned, to achieve desired amounts of thrust. The control mechanism (or controller) may include hardware and/or software programmed and/or configured to carry out desired instructions (which may be predetermined, and/or which may be changed based on conditions during operation).

The thruster 10 as shown is generally cylindrical, with the segments 32 having circular cross section shapes and having cylindrical or disc shapes. Alternatively the thruster 10 and the propellant 14 may have a different cross-sectional shape, such as square or other polygonal shape, or a more complicated shape that includes straight segments and curved segments (for instance).

The propellant segments 32 may be manufactured separately and loaded into the cavity 20. Alternatively the segments 32 may be formed in situ, within the cavity, such as by additive manufacturing methods. The segments 32 may be separate pieces. Alternatively some or all of the segments 32 may be parts of unitary structure, with the propellant material 34 and the sealing material 36 of multiple of the segments 32 being parts of a single piece.

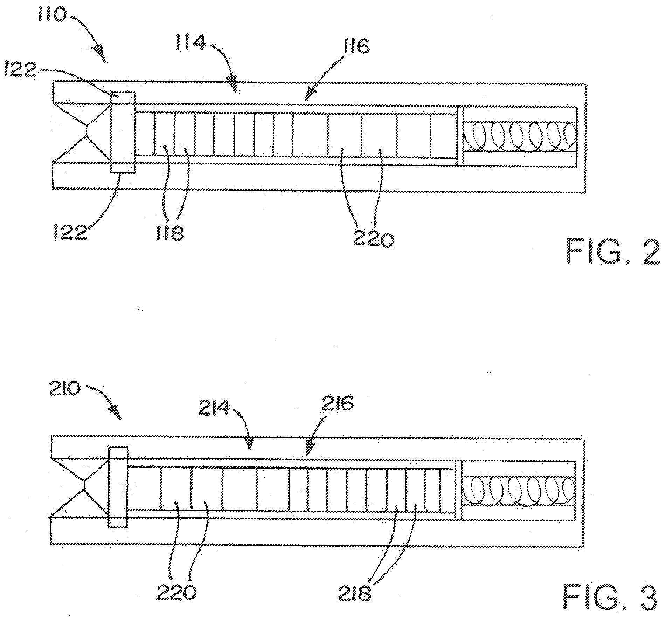

Fig. 2 shows an alternative thruster 110 which is similar to the thruster 10 except that the thruster 110 has a propellant 114 with segments 116 of different sizes, including relatively small segments 118 with a relatively small amount of propellant, and relatively large segments 120 with a relatively large amount of propellant. The differently-sized propellant segments may be used for providing different amounts or sorts of thrust to achieve different purposes. For example the relatively small segments 118 may be configured to be closer to electrodes 122, to be burned first, used for course correction or for drag make-up burns, such as for satellite that is in orbit. The relatively large segments 120 may be used to provide larger amounts of thrust for later burns, such as for de-orbiting the satellite. It will be appreciated that control of thrust may also be accomplished by controlling the amount burning (propellant consumption) in one or more of the segments 118 and/or 120.

Fig. 3 shows another alternative, a thruster 210 that has a propellant 214 with segments 216 of different sizes, including relatively small segments 218 each with a relatively small amount of propellant, and relatively large segments 220 each with a relatively large amount of propellant. Unlike in the thruster 110 (Fig. 2), the thruster 210 is configured such that the relatively large segments 220 are consumed first, before the relatively small segments 218. Such a configuration may be useful (for example) for providing large initial amounts of thrust (for propulsion or relatively large course corrections/changes) followed by relatively small amounts of thrust (for fine course corrections). Again, control of thrust may also be accomplished by controlling the amount burning (propellant consumption) in one or more of the segments 218 and/or 220.

While the propellants 114 and 214 are shown with only two sizes of segments, it is possible for there to be three or more sizes of segments. The sizes for the individual propellant segments may be selected based on their need. With additive manufacturing processes it is possible for the segments (their sizes and/or other characteristics) to be tailored to an individual need for the satellite 410, based on an intended use of the satellite. A likely mission might use a large propulsion unit to change orbit in altitude or inclination then use small thrusts to control attitude or de-spin a reaction wheel. Then the mission may finally use a larger thrust to de-orbit the vehicle when it is no longer needed. The additive manufacturing process allows flexibility in configuring the propellant charge (the number and characteristics of segments), while keeping costs low.

The propellants 114 and 214 show only two possible arrangements for relatively large and relatively small segments. Many other arrangements are possible, for example interspersing relatively large segments and relatively small segments, such as by alternating them.

The propellant charges 14, 114, and 214 may include any suitable number of segments, from two segments to ten or more segments. The segments may be of two types or three or more types. Different of the segments 32, 116, and 216 may use the same propellant material, or may use different propellant material, with different burn characteristics and output, if desired.

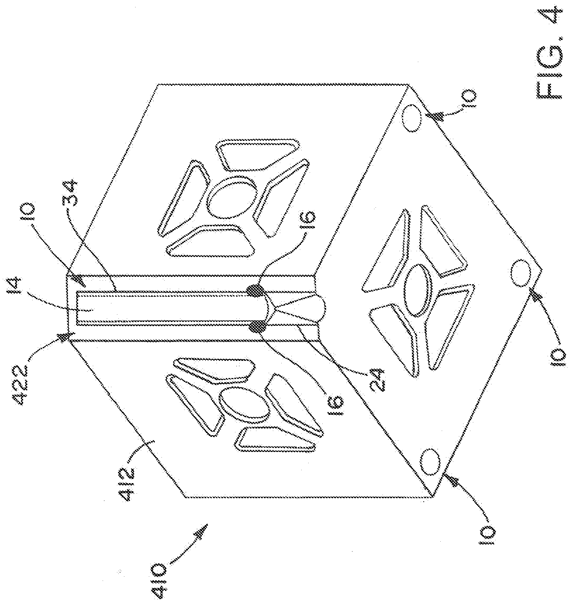

Fig. 4 shows one possible use for the thruster 10 (or the thrusters 110 or 210), a satellite 410 that can be launched as a payload from a spacecraft. The satellite 410 in the illustrated embodiment is a CubeSat miniaturized satellite, but alternatively the satellite 410 could have any of a variety of different sizes, shapes, and configurations.

The satellite has a cubic frame 412 that encloses a payload. The frame 412 may be cubic in shape, having a length, width, and height of about 10 cm, for an overall volume of 1 liter for the satellite 410, as is standard for CubeSat miniaturized satellites. The payload may fit fully within the frame 412, and may have a mass of no more than 1.33 kg. More broadly, the satellite 410 may have a length, width, and height no greater than 15 cm (or no greater than 50 cm), and/or a mass (including the payload 14) of no greater than about 2 kg (or no greater than 20 kg). Other sizes of satellites are possible including satellites that are three times, six times, or nine times the size of this smallest of CubeSat satellites. These larger-sized satellites may also be referred to as CubeSat satellites. Various sizes of CubeSat satellites are referred to as 1U, 3U, 6U, 9U, and 12U satellites, with the notation indicating the size of the satellite in terms of 10cm-cube units. Example other sizes of satellites include 10×10×30cm, with or without an added cylindrical or other-shaped volume on an end; 10×20×30cm; 12×24×36cm; 20x20x30cm; and 20x20x30cm.

The sizes and weights of the previous paragraph may also be applied to a component of a satellite, such as a propulsion unit that may be affixed to larger small satellite, such as a 25 kg satellite (for example). Such a component should itself be considered as fitting under the definition of "satellite," as the term is used herein.

The payload may be any of a variety of things, able to perform any of a variety of functions. Non-limiting examples include global positioning system (GPS) location devices, communication devices, weather sensors, and cameras or other imaging devices.

The frame 412 may be additively manufactured (3D printed), using any of a variety of know additive manufacturing processes. For example the frame 412 may be made by selectively extruding material in desired locations, selectively building up the frame 412 layer by layer. An alternative manufacturing processes for producing the frame 412 include fused-filament fabrication (FFF), also referred to as fused-deposition modeling (FDM). The frame 412 may be made out of any of a variety of materials suitable for additive manufacturing (and suitable for other characteristics desired from the frame 412). Examples of such materials include acrylonitrile butadiene styrene (ABS), polycarbonate, polyetherimide (PEI), and polyurethane, among others.

As an alternative, at least parts of the frame 412 may be produced other than by additive manufacturing. For example portions of the frame 412 may be produced by conventional manufacturing processes such as casting or rolling, perhaps in conjunction with subtractive processes such as boring or other machining processes to remove material.

A series of the thrusters 10 (or alternatively the thrusters 110 and/or 210) are located within the frame 412. The thrusters 10 may be located along edges of the frame 412, where pairs of sides of the frame 412 come together. The thrusters 10 may be located in cavities 422 within the frame 412 that are formed during the manufacture of the frame 142, such as by omitting material of the frame 412 where the thrusters 10 will be located. The cavities 422 may be elongate cavities have a suitable cross-sectional shape for receiving propellant and/or other components of the thrusters 10. Parts of the frame 412 may be structurally part of the thrusters 10, for example defining combustion cavities of the thrusters 10 in which combustion takes place

The outlets for the thrusters 10 thus may be at corners of the frame 412, where three of the sides of the frame 412 come together. The thrusters 10 may be configured to provide thrust in the same direction, but at different locations. Alternatively one or more of the thrusters 10 may be configured to provide thrust in different directions than other of the thrusters 10.

All or part of the thrusters 10 may be integrally formed as part of the formation of the frame 412, with some or all of the components of the thrusters 10 additively manufactured, perhaps being manufactured at the same time and/or as part of the same additive manufacturing process as the manufacturing of the frame 412.

There may be any number of suitable thrusters 10 included as part of the satellite 410. In one embodiment there may be four thrusters 10, all oriented in the same direction, with longitudinal axes parallel to one another. All four of the thrusters 10 may provide thrust in the same direction. For example to change the velocity of the in order to change its orbit (or deorbit the satellite 410). Alternatively there may be a different number of thrusters, for example more than four thrusters, with some of the thrusters oriented perpendicular relative to other of the thrusters. Some thrusters may be used to change the velocity of the satellite, and other thrusters may be used to spin the satellite, for example.

Some or all of the components of the thrusters 10 may be additively manufactured, perhaps as part of the same additive manufacturing process used to produce the frame 412. The propellant 14, the electrodes 16, and/or the nozzle structure 24 (each individual component or any combination of them) may be additively manufactured, such as by use of different extruder nozzles and/or different raw materials for manufacturing. For example the propellant 14 and the electrodes 16 may be additively manufactured together in a single process, such an extrusion process, along with the additive manufacturing of the frame 412. The nozzle structure 24 may also be additively manufactured as part of this process. Alternatively the propellant 14, the electrodes 16, and/or the nozzle structure 24 may be independently manufactured, using additive methods or other manufacturing methods, and may be inserted into the satellite 410 as a unit (or in pieces), during the build up (additive manufacture) of the frame 412. For example, alternatively the propellant 14 may be cast, and then inserted into the frame 412, either during the additive manufacturing process or after the additive manufacturing process.

The formation of the thrusters 10 integrally with the frame 412 may involve an extrusion process with multiple extrusion heads for extruding separate raw materials to form the frame 412, the propellant 14, and the electrodes 16. A suitable controller may be used to control stepper motors (or other suitable devices) to dispense raw materials (from reservoirs) for the frame 412, the propellant 14, and the electrodes 16, in suitable locations, to build up the satellite 410. Alternatively the electrodes 16 may be formed separately, and inserted in suitable locations during the manufacturing process, with the frame 412 and the propellant 14 formed around the electrodes 16.

The electrodes 16 may be formed by various methods. The electrodes 16 may be formed by an FFF process, using a conductively loaded polymer loaded with graphene, graphite, or metal particles. Another additive manufacturing method is a method of printing solid metal wire integrated with plastic in a FFF machine. As another possibility, the electrodes 16 can formed using a liquid-dispensing system that deposits a fine aerosol or liquid drop with a conductive ink with typically silver or gold loading.

For each of the thrusters 10 the propellant 14 and the electrodes 16 may be configured to produce a desired thrust output. This desired thrust output may involve producing different amounts of thrust at different times, such as providing smaller (relatively small) earlier amounts of thrust, such as for maneuvering or drag make-up burns, and larger (relatively large) later amounts of thrust, such as for de-orbit burns. The thrust output may be used for orbit maintenance and/or orbital adjustments.

Thus a single thruster may be configured to tilt the satellite 410 (moving the satellite in pitch and/or yaw), and/or may be configured to roll the satellite 410 about its longitudinal axis. Firing multiple of the thrusters 410 at the same time may allow for pure acceleration of the satellite 410 so as to cause translation of the satellite 410 without changing the orientation of the satellite 410. In addition, any of a variety of complicated maneuvers may be accomplished or accomplishable, including changes of orientation coupled with accelerations to change the translation velocity of the satellite 410.

The thrusters 10 (or 110 and/or 210) may alternatively be used in a wide variety of other flight vehicles, to provide controlled amounts of thrust. The thrusters described herein could be incorporated in manned or unmanned flight vehicles, and in aircraft or spacecraft. The thrusters may be used in satellites, in airplanes, in unmanned aerial vehicles (UAVs or drones), in manned spacecraft, and/or in missiles, to give a few possibilities.

The thrusters described herein provide numerous advantages over prior thrusters. The use of electrically-operated propellant provides safety, which may provide for a better safety classification than thrusters with more conventional propellants have. This may allow flight vehicles with the thrusters to be stored and/or used in places in which thrusters with conventional propellants are prohibited from. The use of segmented propellant may allow for flexibility in use. The feed mechanism may enable the use of the segmented propellant, and to limiting firing to only one or more of a greater number of segments. The use of sealing material around each of the propellant segments may enable long-term storage of the propellant, and may also enable use of the propellant segment by segment. In addition, the configuration of the thrusters described herein may enable their use in small volumes, and/or may enable integration of the thrusters in a structure such as a frame or fuselage.

## Claims

1. A thruster (110, 210) comprising:
an electrically-operated propellant (114, 214), wherein the electrically-operated propellant comprises an oxidizer, a fuel and a binder, and wherein the electrically-operated propellant is configured to extinguish with the cessation of electricity at pressures of between 1379 and 13790 kPa;
electrodes (116, 216) operatively coupled to the electrically-operated propellant; and
a propellant feeder (12) for moving the propellant relative to the electrodes;
wherein the propellant includes multiple propellant segments (118, 120, 218, 220); and
wherein each of the propellant segments includes a sealing material (36) surrounding a propellant material (34), with the sealing material configured to maintain a desired amount of moisture in the propellant material of the propellant segments.

2. The thruster of claim 1, wherein the propellant feeder includes a push rod (30) that pushes the propellant toward the electrodes.

3. The thruster of claim 2, wherein the propellant feeder includes a resilient device (31) providing a resilient force to push the propellant toward the electrodes; and preferably, wherein the resilient device is a coil spring.

4. The thruster of claim 1, wherein the segments include segments (118, 120, 218, 220) of different sizes.

5. The thruster of claim 1, wherein the segments include multiple relatively small segments and multiple relatively large segments that are larger than the relatively small segments.

6. The thruster of claim 5 4 , wherein the relatively small segments and the relatively large segments are positioned such that at least some of the relatively small segments are consumed before any of the relatively large segments are consumed.

7. The thruster of any of claims 1 to 6, further comprising a nozzle (24) through which pass pressurized gasses from combustion of the electrically-operated propellant.

8. The thruster of any of claims 1 to 7, the thruster being part of a flight vehicle (410).

9. A method of firing a thruster (110, 210), the method comprising:
igniting a first electrically-operated propellant segment (118, 220) of a plurality of electrically-operated propellant segments (32), wherein the igniting includes using electrodes (116, 216) of the thruster to ignite the electrically-operated propellant segment;
moving a second electrically-operated propellant segment (120, 218) into engagement with the electrodes; and
subsequent to the moving and to the igniting the first electrically-operated propellant segment, using the electrodes to ignite the second electrically-operated propellant segment;
wherein each electrically-operated propellant segment comprises a propellant material (34), wherein the propellant material comprises an oxidizer, a fuel and a binder, and wherein the propellant material is configured to extinguish with the cessation of electricity at pressures of between 1379 and 13790 kPa; and
wherein each of the propellant segments includes a sealing material (36) surrounding the propellant material, with the sealing material configured to maintain a desired amount of moisture in the propellant material.

10. The method of claim 9,
wherein the first electrically-operated propellant segment (118) is smaller than the second electrically-operated propellant segment (120); and
wherein the igniting the second electrically-operated propellant segment produces more thrust than the igniting the first electrically-operated propellant segment; or
wherein the first electrically-operated propellant segment (220) is larger than the second electrically-operated propellant segment (218); and
wherein the igniting the second electrically-operated propellant segment produces less thrust than the igniting the first electrically-operated propellant segment; or
wherein the first electrically-operated propellant segment (32) is the same size as the second electrically-operated propellant segment (32); and
wherein the igniting the second electrically-operated propellant segment produces the same amount of thrust as the igniting the first electrically-operated propellant segment.

11. The method of any of claims 9 to 10 , further comprising only partially burning one or both of the propellant segments.

12. The method of any of claims 9 to 11, wherein the moving the second electrically-operated propellant segment into engagement with the electrodes is performed by a propellant feeder (12) of the thruster.

13. The method of claim 12, wherein the moving the second electrically-operated propellant segment into engagement with the electrodes is part of moving all unconsumed electrically-operated propellant segments of the plurality of electrically-operated propellant segments; and.
preferably, wherein the moving the unconsumed electrically-operated propellant segments includes using a control rod (30) of the propellant feeder to push the unconsumed electrically-operated propellant segments toward the electrodes.

14. The method of claim 13, wherein the moving the unconsumed electrically-operated propellant segments includes using a resilient device (31) of the propellant feeder to push the unconsumed electrically-operated propellant segments toward the electrodes.

## Patentansprüche

1. Triebwerk (110, 210), das Folgendes umfasst:
ein elektrisch betriebener Treibstoff (114, 214), wobei der elektrisch betriebene Treibstoff einen Oxidator, einen Brennstoff und ein Bindemittel umfasst, und wobei der elektrisch betriebene Treibstoff konfiguriert ist, um mit der Beendigung von Elektrizität bei Drücken zwischen 1379 und 13790 kPa zu erlöschen;
Elektroden (116, 216), die mit dem elektrisch betriebenen Treibstoff wirkgekoppelt sind; und
eine Treibstoffzuführung (12) zum Bewegen des Treibstoffs relativ zu den Elektroden;
wobei der Treibstoff vielfache Treibstoffsegmente (118, 120, 218, 220) beinhaltet; und
wobei jedes der Treibstoffsegmente ein Dichtmaterial (36) beinhaltet, das ein Treibstoffmaterial (34) umgibt, wobei das Dichtmaterial konfiguriert ist, um eine gewünschte Feuchtigkeitsmenge in dem Treibstoffmaterial der Treibstoffsegmente aufrechtzuerhalten.

2. Triebwerk nach Anspruch 1, wobei die Treibstoffzuführung eine Schubstange (30) beinhaltet, die den Treibstoff zu den Elektroden hin schiebt.

3. Triebwerk nach Anspruch 2, wobei die Treibstoffzuführung eine elastische Vorrichtung (31) beinhaltet, die eine elastische Kraft bereitstellt, um den Treibstoff zu den Elektroden hin zu schieben; und bevorzugt, wobei die elastische Vorrichtung eine Schraubenfeder ist.

4. Triebwerk nach Anspruch 1, wobei die Segmente Segmente (118, 120, 218, 220) unterschiedlicher Größe beinhalten.

5. Triebwerk nach Anspruch 1, wobei die Segmente vielfache relativ kleine Segmente und vielfache relativ große Segmente beinhalten, die größer als die relativ kleinen Segmente sind.

6. Triebwerk nach Anspruch 5, wobei die relativ kleinen Segmente und die relativ großen Segmente derart positioniert sind, dass wenigstens einige der relativ kleinen Segmente verbraucht werden, bevor beliebige der relativ großen Segmente verbraucht werden.

7. Triebwerk nach einem der Ansprüche 1 bis 6, das ferner eine Düse (24) umfasst, durch die unter Druck stehende Gase aus einer Verbrennung des elektrisch betriebenen Treibstoffs strömen.

8. Triebwerk nach einem der Ansprüche 1 bis 7, wobei das Triebwerk Teil eines Luftfahrzeugs (410) ist.

9. Verfahren zum Anfeuern eines Triebwerks (110, 210), wobei das Verfahren Folgendes umfasst:
Zünden eines ersten elektrisch betriebenen Treibstoffsegments (118, 220) mehrerer elektrisch betriebener Treibstoffsegmente (32), wobei das Zünden ein Verwenden von Elektroden (116, 216) des Triebwerks beinhaltet, um das elektrisch betriebene Treibstoffsegment zu zünden;
Bewegen eines zweiten elektrisch betriebenen Treibstoffsegments (120, 218) in Eingriff hinein mit den Elektroden; und
nachfolgend von dem Bewegen und dem Zünden des ersten elektrisch betriebenen Treibstoffsegments, unter Verwendung der Elektroden, um das zweite elektrisch betriebene Treibstoffsegment zu zünden;
wobei jedes elektrisch betriebene Treibstoffsegment ein Treibstoffmaterial 34) umfasst, wobei das Treibstoffmaterial einen Oxidator, einen Brennstoff und ein Bindemittel umfasst, und wobei das Treibstoffmaterial konfiguriert ist, um mit der Beendigung von Elektrizität bei Drücken zwischen 1379 und 13790 kPa zu erlöschen; und
wobei jedes der Treibstoffsegmente ein Dichtmaterial (36) beinhaltet, das das Treibstoffmaterial umgibt, wobei das Dichtmaterial konfiguriert ist, um eine gewünschte Feuchtigkeitsmenge in dem Treibstoffmaterial aufrechtzuerhalten.

10. Verfahren nach Anspruch 9, wobei das erste elektrisch betriebene Treibstoffsegment (118) kleiner als das zweite elektrisch betriebene Treibstoffsegment (120) ist; und
wobei das Zünden des zweiten elektrisch betriebenen Treibstoffsegments mehr Schub erzeugt als das Zünden des ersten elektrisch betriebenen Treibstoffsegments; oder
wobei das erste elektrisch betriebene Treibstoffsegment (220) größer als das zweite elektrisch betriebene Treibstoffsegment (218) ist; und
wobei das Zünden des zweiten elektrisch betriebenen Treibstoffsegments weniger Schub erzeugt als das Zünden des ersten elektrisch betriebenen Treibstoffsegments; oder
wobei das erste elektrisch betriebene Treibstoffsegment (32) die gleiche Größe wie das zweite elektrisch betriebene Treibstoffsegment (32) hat; und
wobei das Zünden des zweiten elektrisch betriebenen Treibstoffsegments die gleiche Schubmenge erzeugt wie das Zünden des ersten elektrisch betriebenen Treibstoffsegments.

11. Verfahren nach einem der Ansprüche 9 bis 10, das ferner nur teilweises Verbrennen eines oder beider Treibstoffsegmente umfasst.

12. Verfahren nach einem der Ansprüche 9 bis 11, wobei das Bewegen des zweiten elektrisch betriebenen Treibstoffsegments in Eingriff hinein mit den Elektroden mittels einer Treibstoffzuführung (12) des Triebwerks durchgeführt wird.

13. Verfahren nach Anspruch 12, wobei das Bewegen des zweiten elektrisch betriebenen Treibstoffsegments in Eingriff hinein mit den Elektroden Teil des Bewegens aller nicht verbrauchten elektrisch betriebenen Treibstoffsegmente der mehreren elektrisch betriebenen Treibstoffsegmente ist; und
bevorzugt, wobei das Bewegen der nicht verbrauchten elektrisch betriebenen Treibstoffsegmente das Verwenden einer Steuerstange (30) der Treibstoffzuführung beinhaltet, um die nicht verbrauchten elektrisch betriebenen Treibstoffsegmente zu den Elektroden hin zu schieben.

14. Verfahren nach Anspruch 13, wobei das Bewegen der nicht verbrauchten elektrisch betriebenen Treibstoffsegmente das Verwenden einer elastischen Vorrichtung (31) der Treibstoffzuführung beinhaltet, um die nicht verbrauchten elektrisch betriebenen Treibstoffsegmente zu den Elektroden hin zu schieben.

## Revendications

1. Propulseur (110, 210) comprenant :
un agent de propulsion actionné électriquement (114, 214), dans lequel l'agent de propulsion actionné électriquement comprend un comburant, un combustible et un liant, et dans lequel l'agent de propulsion actionné électriquement est configuré pour s'éteindre avec l'arrêt de l'électricité à des pressions comprises entre 1379 et 13790 kPa ;
des électrodes (116, 216) fonctionnellement couplées à l'agent de propulsion actionné électriquement ; et
un dispositif d'alimentation en agent de propulsion (12) pour déplacer l'agent de propulsion par rapport aux électrodes ;
dans lequel l'agent de propulsion comporte de multiples segments d'agent de propulsion (118, 120, 218, 220) ; et
dans lequel chacun des segments d'agent de propulsion comporte un matériau d'étanchéité (36) entourant un matériau d'agent de propulsion (34), le matériau d'étanchéité étant conçu pour maintenir une quantité souhaitée d'humidité dans le matériau d'agent de propulsion des segments d'agent de propulsion.

2. Propulseur selon la revendication 1, dans lequel le dispositif d'alimentation en agent de propulsion comporte une tige de poussée (30) qui pousse l'agent de propulsion vers les électrodes.

3. Propulseur selon la revendication 2, dans lequel le dispositif d'alimentation en agent de propulsion comporte un dispositif élastique (31) fournissant une force élastique pour pousser l'agent de propulsion vers les électrodes ; et de préférence, dans lequel le dispositif élastique est un ressort hélicoïdal.

4. Propulseur selon la revendication 1, dans lequel les segments comportent des segments (118, 120, 218, 220) de tailles différentes.

5. Propulseur selon la revendication 1, dans lequel les segments comportent de multiples segments relativement petits et de multiples segments relativement grands qui sont plus grands que les segments relativement petits.

6. Propulseur selon la revendication 5, dans lequel les segments relativement petits et les segments relativement grands sont positionnés de telle sorte qu'au moins certains des segments relativement petits sont consommés avant qu'aucun des segments relativement grands ne soit consommé.

7. Propulseur selon l'une quelconque des revendications 1 à 6, comprenant en outre une tuyère (24) à travers laquelle passent des gaz sous pression provenant de la combustion de l'agent de propulsion actionné électriquement.

8. Propulseur selon l'une quelconque des revendications 1 à 7, le propulseur faisant partie d'un véhicule aérien (410).

9. Procédé de mise en marche d'un propulseur (110, 210), le procédé comprenant :
l'allumage d'un premier segment d'agent de propulsion actionné électriquement (118, 220) d'une pluralité de segments d'agent de propulsion actionné électriquement (32), dans lequel l'allumage comporte l'utilisation d'électrodes (116, 216) du propulseur pour allumer le segment d'agent de propulsion actionné électriquement ;
le déplacement d'un second segment d'agent de propulsion actionné électriquement (120, 218) en prise avec les électrodes ; et
à la suite du déplacement et de l'allumage du premier segment d'agent de propulsion actionné électriquement, l'utilisation des électrodes pour allumer le second segment d'agent de propulsion actionné électriquement ;
dans lequel chaque segment d'agent de propulsion actionné électriquement comprend un matériau d'agent de propulsion (34), dans lequel le matériau d'agent de propulsion comprend un oxydant, un combustible et un liant, et dans lequel le matériau d'agent de propulsion est conçu pour s'éteindre avec l'arrêt de l'électricité à des pressions comprises entre 1379 et 13790 kPa ; et
dans lequel chacun des segments d'agent de propulsion comporte un matériau d'étanchéité (36) entourant le matériau d'agent de propulsion, le matériau d'étanchéité étant conçu pour maintenir une quantité souhaitée d'humidité dans le matériau d'agent de propulsion.

10. Procédé selon la revendication 9, dans lequel le premier segment d'agent de propulsion actionné électriquement (118) est plus petit que le second segment d'agent de propulsion actionné électriquement (120) ; et
dans lequel l'allumage du second segment d'agent de propulsion actionné électriquement produit plus de poussée que l'allumage du premier segment d'agent de propulsion actionné électriquement ; ou
dans lequel le premier segment d'agent de propulsion actionné électriquement (220) est plus grand que le second segment d'agent de propulsion actionné électriquement (218) ; et
dans lequel l'allumage du second segment d'agent de propulsion actionné électriquement produit moins de poussée que l'allumage du premier segment d'agent de propulsion actionné électriquement ; ou
dans lequel le premier segment d'agent de propulsion actionné électriquement (32) est de la même taille que le second segment d'agent de propulsion actionné électriquement (32) ; et
dans lequel l'allumage du second segment d'agent de propulsion actionné électriquement produit la même importance de poussée que l'allumage du premier segment d'agent de propulsion actionné électriquement.

11. Procédé selon l'une quelconque des revendications 9 à 10, comprenant en outre uniquement la combustion partielle d'un ou des deux segments d'agent de propulsion.

12. Procédé selon l'une quelconque des revendications 9 à 11, dans lequel le déplacement du second segment d'agent de propulsion actionné électriquement pour être en prise avec les électrodes est effectué par un dispositif d'alimentation en agent de propulsion (12) du propulseur.

13. Procédé selon la revendication 12, dans lequel le déplacement du second segment d'agent de propulsion actionné électriquement pour être en prise avec les électrodes fait partie du déplacement de tous les segments d'agent de propulsion actionnés électriquement non consommés de la pluralité de segments d'agent de propulsion actionnés électriquement ; et
de préférence, dans lequel le déplacement des segments d'agent de propulsion actionnés électriquement non consommés comporte l'utilisation d'une tige de commande (30) du dispositf d'alimentation en agent de propulsion pour pousser les segments d'agent de propulsion actionnés électriquement non consommés vers les électrodes.

14. Procédé selon la revendication 13, dans lequel le déplacement des segments d'agent de propulsion actionnés électriquement non consommés comporte l'utilisation d'un dispositif élastique (31) du dispositif d'alimentation en agent de propulsion pour pousser les segments d'agent de propulsion actionnés électriquement non consommés vers les électrodes.
